# EUROPEAN PATENT APPLICATION

(11) **EP 2 958 063 A1**
(43) Date of publication of application: **23.12.2015**
(21) Application number: 14290176.8
(22) Date of filing: 18.06.2014
(51) Int. Cl.: G06Q 10/08

(54) **Dynamic availability localization for travel services**

(71) Applicant: Amadeus S.A.A., 06410 Biot (FR)
(72) Inventor: Rubsamen, Roman, 83550 Vidauban (FR); Singer, Joel, 06600 Antibes (FR); Rivas, Sergio, 198784 Singapore (SG); Cottereau, Jeremie, 06600 Antibes (FR)
(74) Representative: Samson & Partner Patentanwälte mbB

(57) **Abstract**

Methods, systems, and computer program products for dynamically computing availability for travel inventory items managed by an inventory system. An inventory request is received for a type of travel inventory item managed by the inventory system. One or more types of geographical location data corresponding to the inventory request are determined. At least one of the types of geographical location data is selected to use to compute the availability. At least one geographical inventory control associated with each type of travel inventory item for each geographical location indicated by the selected types of geographical location data is determined. The availability for the inventory request is determined based at least in part on the at least one geographical inventory control determined for each indicated geographical location.

## Description

### BACKGROUND

The invention is generally related to computers and computer software, and in particular to methods, systems, and computer program products for travel planning and reservations.

Computer technology is increasingly used in the travel industry to manage and support travel reservations, as well as data associated therewith. In particular, third party reservation agents, such as travel agents, and/or customers (e.g., travelers) often utilize computer-based devices to interface with a travel reservation system, such as a Global Distribution System (GDS), to book travel arrangements and/or travel-related services for the customer. When reserving travel-related services using such reservation terminals in communication with such travel reservation systems, a travel agent and/or customer may initiate a reservation session between a client device and the travel reservation system to book one or more travel inventory items corresponding to the travel-related services (e.g., flights, hotels, rail transportation, dining reservations, etc.) for the customer during the reservation session. In turn, the travel reservation system may initiate an inventory session with one or more inventory systems that manage inventory for one or more travel merchants and/or travel service providers.

Because computer technology is utilized to increasingly manage and support travel reservations, a continuing need exists in the art for improved computer-based travel planning and reservation systems, as well as improved methods and computer program products, for facilitating travel-related service booking.

### SUMMARY

Embodiments of the invention generally comprise methods, systems, and computer program for dynamically computing availability for travel inventory items managed by a travel inventory system. Consistent with embodiments of the invention, the travel inventory system may receive an inventory request for one or more types of travel inventory items managed by the travel inventory system. A type of travel inventory item generally refers to a travel service, such as a flight, a hotel accommodation, etc. A travel inventory item generally refers to an instance of a travel service, such as a flight ticket, a car rental, a rail travel ticket, a hotel accommodation, a taxi service, a dining reservation, etc. The inventory system determines a plurality of types of geographical location data corresponding to the inventory request. One or more of the types of geographical location data are selected for use in computing the availability for each of the travel inventory items of the one or more requested types of travel inventory items. One or more geographical inventory controls associated with each of the one or more types of travel inventory items are determined for each geographical location indicated by the selected types of geographical location data, and availability for the inventory request is computed based on the one or more geographical inventory controls determined for each indicated geographical location.

### BRIEF DESCRIPTION OF THE SEVERAL VIEWS OF THE DRAWINGS

The accompanying drawings, which are incorporated in and constitute a part of this specification, illustrate various embodiments of the invention and, together with a general description of the invention given above and the detailed description of the embodiments given below, serve to explain the embodiments of the invention.
FIG. 1 is a block diagram of one or more reservation systems, one or more inventory systems, and one or more client devices consistent with embodiments of the invention.
FIG. 2 is a block diagram of a reservation system of FIG. 1.
FIG. 3 is a flowchart illustrating a sequence of operations that may be performed by the systems of FIGS. 1-2 to dynamically determine availability based on one or more types of geographical location data for one or more travel inventory items.
FIG. 4 is a flowchart illustrating a sequence of operations that may be performed by the systems of FIGS. 1-2 to select one or more types of geographical location data associated with an inventory request for use in calculating availability for one or more travel inventory items.
FIG. 5 is an example routine in the form of a sequence diagram that may be performed by the inventory system, the reservation system, and at least one client device.
FIG. 6 is a block diagram that illustrates an example determination of one or more types of geographical location data for an example inventory request.
FIGS. 7A-C are block diagrams that illustrate an example determination of one or more types of geographical location data for an example booking request, and a computation of candidate availabilities based at least in part on the types of geographical location data.

### DETAILED DESCRIPTION

Embodiments of the invention provide systems, methods, and computer program products for dynamically determining availability for one or more travel inventory items based at least in part on one or more types of geographical location data associated with an inventory request. Generally, the one or more types of geographical location data associated with an inventory request may include a point of sale, a point of commencement, a point of sale internet protocol (IP) address, point of departure, a point of arrival, a point of sale global positioning system (GPS) coordinates identifier, and/or other such types of data that may correspond to a geographical location. For an inventory request, embodiments of the inventory system may determine the one or more types of geographical location data, where each type of geographical location data identifies a particular geographical location associated with the particular type. The inventory system may select one or more types of the geographical location data to use when computing an availability for the one or more requested travel inventory items.

For each selected type of geographical location data, the inventory system determines geographical inventory controls associated with each of the one or more travel inventory items based on the type of geographical location data. A geographical inventory control may include inventory limits, revenue data, and/or other such information that may be used in determining availability. For example, a geographical inventory control may define buckets for a type of travel inventory item for a geographical location indicated by a selected type of geographical location data, which may define continuous bid price ranges that may be used in computing availability. As another example, a geographical inventory control may define one or more subclasses for a travel inventory item. In addition, a geographical inventory control may indicate manual closure of a type of travel inventory item for a geographical location indicated by a selected type of geographical location data (e.g., closure of a flight).

Revenue data generally corresponds to various types of data that may be used by an inventory system to determine availability and revenue for an offered travel service through the reservation/sale of travel inventory items for the travel service. Revenue data may include, for example, bid prices, yield, etc. A bid price generally corresponds to a lowest price at which a travel inventory item of a travel service (e.g., a seat on a flight) may be sold. Similarly, a yield generally corresponds to an average revenue that may be obtained from a sale of a travel inventory item of a travel service, where the yield may be based at least in part on bid price, booking class, travel dates, etc. For each selected type of geographical location data, the inventory system may compute a candidate availability for each of the one or more travel inventory items. The inventory system may select a candidate availability of each of the one or more travel inventory items as the availability for each of the one or more travel inventory items for the inventory request, and the inventory system may communicate an inventory response that indicates the determined availability for each of the one or more travel inventory items.

As discussed above, the types of geographical location data may be determined based at least in part on the inventory request. A point of sale (POS) generally identifies a geographical location at which a sale/reservation of a travel inventory item occurred. For example, a point of sale may identify a city and/or country of a travel agency that generated a booking request associated with the travel inventory item. A point of sale may be determined from the inventory request, where the inventory request may include a city and/or country identifier, an International Air Transport Association (IATA) code associated with a reservation agent, and/or other such data that may be used to determine a point of sale associated with the inventory request. In some embodiments, the inventory request may include data that identifies a point of commencement, where the point of commencement (POC) generally refers to a geographical location at which a first travel segment of a journey occurs. For example, if a journey includes a first flight from city A to city B and a second flight from city B to city C, city A would be the point of commencement.

A point of sale IP (POSIP) may be determined in some embodiments, where the point of sale IP generally refers to a communication network address (e.g., an IP address) corresponding to the origination of the inventory request. For example, if a client device is in communication with a reservation system for a reservation session, and the reservation system is in communication with an inventory system for a corresponding inventory session, the IP address of the client device may be determined to be the POSIP. Based on the determined POSIP, some embodiments of the invention may determine a geographical location by querying an IP geolocation database, where the IP geolocation database may be configured to store geographical location information associated with IP addresses. The geographical location information stored by the IP geolocation database may include, for example, a region, country identifier, state identifier, city code, postal code, latitude-longitude information, time zone, internet service provider (ISP), and/or a proxy service associated with the IP address. As will be described in further detail below, in some embodiments of the invention, the inventory system may determine a POSIP associated with a received inventory request, and the inventory system may determine whether to use the POSIP in determining an availability based at least in part on data stored in the IP geolocation database corresponding to the POSIP.

In some embodiments, an inventory request may not include IP address information such that the the inventory system may not be able to determine a POSIP for the inventory request. For example, IATA standards generally do not require IP address information in reservation and/or inventory requests. Hence the inclusion of such IP address information generally varies based on travel reservation service provider. For example, a web-based travel reservation interface may include IP address information when communicating with a reservation system, while a client device used in a travel agency setting may not include IP address information when communicating with a reservation system. Because the IATA standards generally do not define a standard edifact for IP address information, some client devices and/or reservation systems may communicate IP address information in an IATA Additional Business Source Information (ABI) edifact that is used in reservation and inventory session communications.

Generally, an IP address may be used to determine an approximate geographical location associated with a client device corresponding to an inventory request. However, if a client device is connected through a proxy service, a determined IP address may not accurately reflect an approximate geographical location of the client device. In such situations, the determined IP address may be used to determine an approximate geographical location of the proxy service, which may lead to undesirable availability computations for travel inventory items. As will be described herein, some embodiments of the invention may identify an inventory request associated with a proxy service and calculate availability for the requested travel inventory items based at least in part on such identification. As should be appreciated, a proxy service (also referred to as a proxy server) generally refers to any communication server configured to act as an intermediary for any requests from a client to other servers. Generally, a client may communicate with a proxy service, and the proxy service may communicate with other resources on behalf of the client. For example, proxy servers may be used to connect to and/or communicate information with other servers over the Internet. Examples of a proxy service may include a web proxy, a SOCKS proxy, a transparent proxy (e.g., intercepting proxy, inline proxy, and/or forced proxy), a virtual private network (VPN) service, a networked anonymizer service, and/or other such types of services that may be used to mask and/or anonymize an IP address of an originating client device.

A point of departure (POD) may be determined based on the inventory request, where the point of departure corresponds to a board point of an earliest travel segment of a journey. If two or more travel segments have the same departure time, then the inventory system may determine the point of departure based on a business rule. Similarly, a point of arrival (POA) may be determined based on the inventory request, where the point of arrival corresponds to an unload point for a latest travel segment of a journey. If two or more travel segments have the same arrival time, then the inventory system may determine the point of arrival based on a business rule.

A point of sale GPS (POSGPS) may be determined in some embodiments, where the POSGPS generally refers to geographical coordinates (e.g., GPS coordinates) that may be associated with an end-user system (e.g., a client device) that is associated with the inventory request. For example, some web-based travel reservation interfaces support the determination of GPS coordinates for an interfacing user device. In some embodiments the determined GPS coordinates for the end-user system, such as a user device, may be determined from the inventory request. In these embodiments of the invention, a GPS geolocation database may store information corresponding to GPS coordinates such as a region, country code, state, city code, nearest airport code, postal code, time zone, and/or other such information for GPS coordinates. The inventory system may query the GPS geolocation database based on GPS coordinates determined for an inventory request to determine a geographical location. As discussed above with regard to the POSIP, IATA standards generally do not require GPS coordinate information for reservation/inventory sessions. Therefore, in some embodiments of the invention, a client device and/or reservation system may communicate GPS coordinate information in the IATA ABI edifact.

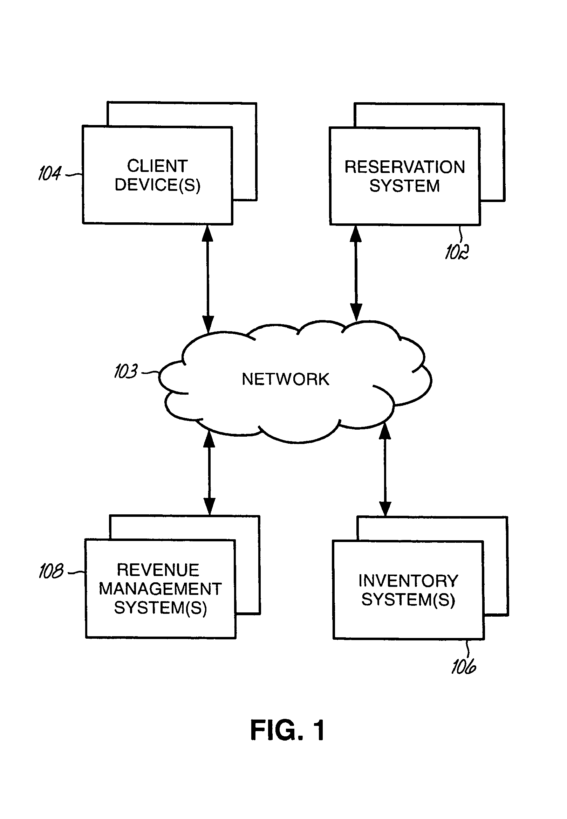

Turning now to the figures and particularly to FIG. 1, this figure provides a block diagram illustrating the one or more devices and/or systems consistent with embodiments of the invention. As shown in FIG. 1, a reservation system 102 may be implemented as one or more servers. The reservation system 102 may be connected to a communication network 103, where the communication network 103 may comprise the Internet, a local area network (LAN), a wide area network (WAN), a cellular voice/data network, one or more high speed bus connections, and/or other such types of communication networks. A client device 104 may be connected to the communication network 103, such that a customer or reservation agent (e.g., travel agency or other such travel reservation service) may initialize a reservation session with the reservation system 102 to communicate a travel request and/or other such relevant data to the reservation system 102. The client device 104 may be a personal computing device, tablet computer, thin client terminal, smart phone and/or other such computing device.

One or more servers for one or more inventory systems 106 of one or more travel merchants are connected to the communication network 103. The reservation system 102 may initialize an inventory session over the communication network 103 with each inventory system 106 for which a travel inventory item is to be booked. Consistent with embodiments of the invention, a reservation agent or customer (i.e., a traveler) may interface with the reservation system 102 using the client device 104 in a reservation session to provide data for a travel request. In turn, the reservation system may interface with each inventory system 106 of each travel merchant that provides a travel inventory item associated with the travel request that generally requires an availability determination (e.g., a flight, rail ticket, hotel room, event ticket, etc.) to determine availability. While the reservation system 102 and inventory system 106 are described herein as separate entities, the invention is not so limited. In some embodiments, various hardware, software components, and/or sequences of operations described with respect to the reservation system 102 or inventory system 106 may be implemented on either the reservation system 102 and/or inventory system 106. Furthermore, as will be appreciated, in some embodiments the reservation system 102 and inventory system 106 may be components of a global distribution system (GDS).

As will be described in detail below, consistent with embodiments of the invention, an interface may be generated by the reservation system such that a user (i.e., a traveler or a travel agent) may input information that may be utilized to generate a travel request that may in turn be used to determine one or more travel solutions consistent with embodiments of the invention. To determine one or more travel solutions, the reservation system 102 interfaces with one or more inventory systems 106 to determine an availability for each travel inventory item to be booked for a travel solution. In this regard, the reservation system 102 may communicate an inventory request to the inventory system 106, and the inventory system 106 may determine an availability for each requested travel inventory item. An inventory response may be communicated to the reservation system 102 that includes the determined availability for each travel inventory item of the inventory request. Consistent with some embodiments of the invention, the inventory system may determine availability for a travel inventory item based at least in part on geographical inventory controls, one or more business rules, and/or geographical location information associated with the inventory request.

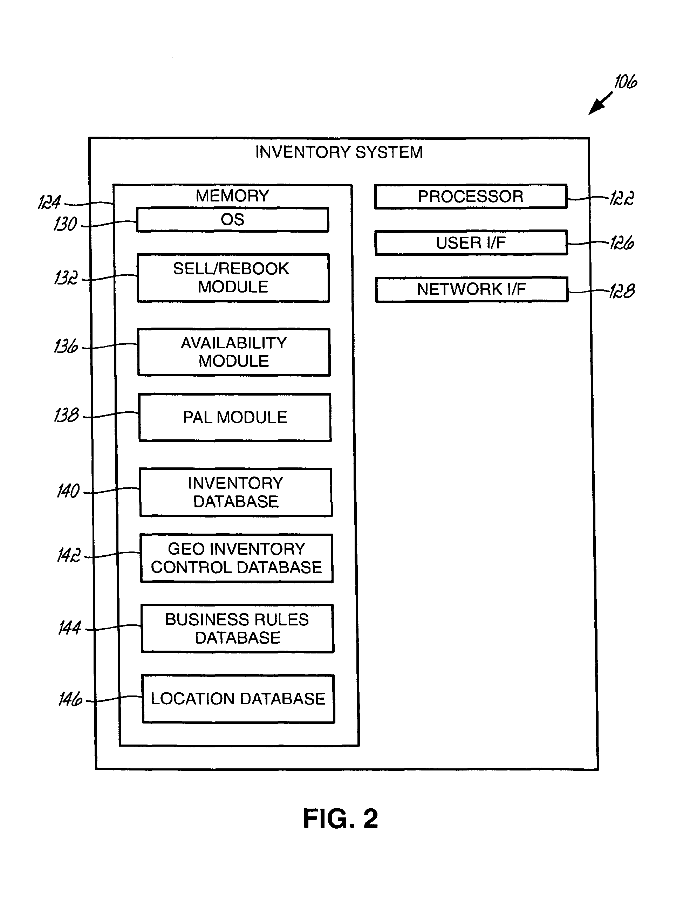

Referring to FIG. 2, this figure provides a block diagram that illustrates the components of the one or more servers of an inventory system 106 consistent with embodiments of the invention. The inventory system 106 includes at least one processor 122 including at least one hardware-based microprocessor and a memory 124 coupled to the at least one processor 122. The memory 124 may represent the random access memory (RAM) devices comprising the main storage of the inventory system 106, as well as any supplemental levels of memory, e.g., cache memories, non-volatile or backup memories (e.g., programmable or flash memories), read-only memories, etc. In addition, memory 124 may be considered to include memory storage physically located elsewhere in the inventory system 106, e.g., any cache memory in a microprocessor, as well as any storage capacity used as a virtual memory, e.g., as stored on a mass storage device or on another computer coupled to the inventory system 106 via the communication network 103, such as a memory of the reservation system 102.

For interface with a user or operator, the inventory system 106 may include a user interface 126 incorporating one or more user input/output devices, e.g., a keyboard, a pointing device, a display, a printer, etc. Otherwise, input may be retrieved via another computer or terminal (e.g., the client device 104 and/or the reservation system 102) over a network interface 128 coupled to the communication network 103. The inventory system 106 also may be in communication with one or more mass storage devices, which may be, for example, internal hard disk storage devices, external hard disk storage devices, external databases, storage area network devices, etc.

The inventory system 106 typically operates under the control of an operating system 130 and executes or otherwise relies upon various computer software applications, components, programs, objects, modules, data structures, etc., including for example, a sell/rebook module 132, an availability module 136, and/or a passenger localization (PAL) module 138. Furthermore, the memory 124 of the inventory system 106 may generally store one or more databases including for example, an inventory database 140 that stores data associated with one or more travel inventory items managed by the inventory system 106, a geographical inventory control database 142 that stores inventory control information for one or more travel inventory items based on geographical location, a business rules database 144 that stores business rules/system parameters for the inventory system of the associated travel merchant, and/or a location database 146 that stores information that may correspond to GPS coordinates and/or IP addresses. Each database 140-146 may include data and supporting data structures that store and organize the data. In particular, each database 140-146 may be arranged with any database organization and/or structure including, but not limited to, a relational database, a hierarchical database, a network database, and/or combinations thereof. A database management system in the form of a computer software application executing as instructions on a processing unit of the inventory system 106 is used to access the information or data stored in records of the databases 140 in response to a query. The inventory database 140 generally stores inventory data corresponding to travel inventory items of a travel merchant that the inventory system 106 is configured to manage. The inventory data that may be stored in the inventory database 140, may include available travel inventory items, uncommitted booked travel inventory items, committed booked travel inventory items, a load factor for a group/type of travel inventory items (e.g., the number of booked seats on a flight-date for a cabin compared to the total number of seats on the flight-date for the cabin), time to departure for each type of travel inventory item, and/or other such information.

Consistent with embodiments of the invention the modules 132-138 and/or other such modules/applications may be executing on the inventory system 106, and the modules 132-138 may cause the processor 122 to perform operations consistent with embodiments of the invention. The sell/rebook module 132 may be configured to analyze a received inventory request, and determine a travel inventory item for the inventory request. The availability module 136 may query the inventory database 140 to determine travel inventory item availability. In general, the availability module 136 may calculate travel inventory item availability based at least in part on data stored in the inventory database 140. Consistent with some embodiments of the invention, the availability module 136 may determine availability for a travel inventory item based at least in part on a geographical location determined by the PAL module 138, where the PAL module may be configured to: determine one or more types of geographical location data associated with an inventory request; determine one or more geographical inventory controls associated with the one or more types of geographical location data; select types of geographical location data for computing availability; compute candidate availabilities for a travel inventory item for each geographical location indicated by the selected types of geographical location data; and/or determine an availability for the inventory response based at least in part on the one or more geographical inventory controls, types of geographical location data, and/or candidate availabilities.

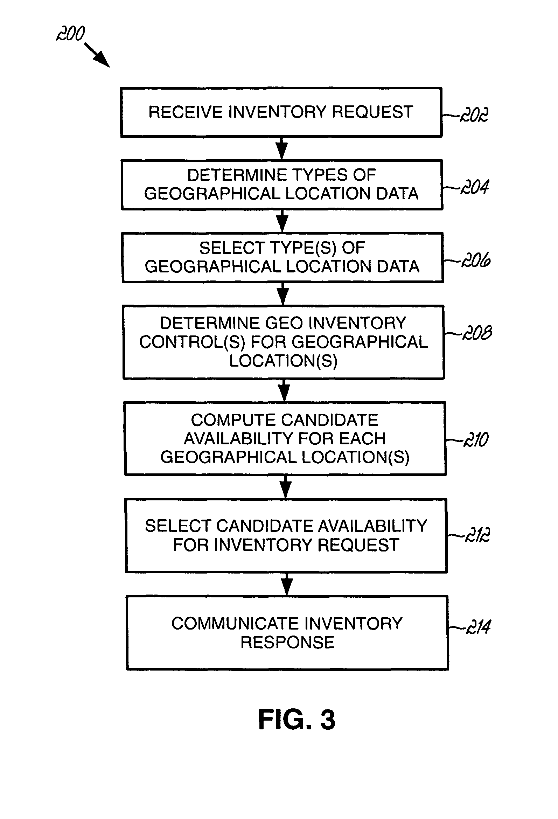

Turning now to FIG. 3, this figure provides a flowchart 200 that illustrates the sequence of operations and may be performed by an inventory system 106 consistent with embodiments of the invention to dynamically compute availability for one or more travel inventory items managed by the inventory system 106. As shown, consistent with some embodiments of the invention, the inventory system 106 may receive an inventory request for one or more types of travel inventory items that are managed by the inventory system 106 (block 202). One or more types of geographical location data corresponding to the inventory request are determined (block 204). As discussed previously, based on the inventory request, the types of geographical location data may include, for example, a point of sale, a point of commencement, a point of sale IP address, a point of sale GPS coordinate pair, a point of arrival, and point of departure, and/or other such types of geographical information that may be associated with an inventory request.

One or more types of geographical location data are selected for use in computing an availability for each of the one or more travel inventory items (block 206). Consistent with some embodiments of the invention, system parameters and/or business rules may be used to select one or more types of the determined geographical location data for use in computing availability. For example, a business rule for a travel merchant of an inventory system may identify POSIP as a type of geographical location data to be used in computing availability if the POSIP may be determined from the inventory request. If the inventory system cannot determine the POSIP, the business rule may identify a point of sale as a type of geographical location data to be used in computing availability. In some embodiments, the business rules and/or system parameters may identify more than one type of geographical location data for selection in computing availability.

Using the selected types of geographical location data, the inventory system determines one or more geographical inventory controls for each of the one or more travel inventory items based on each of the one or more geographical locations indicated by the types of geographical location data (block 208). As discussed, a geographical inventory control may comprise inventory limits, revenue data, and/or other such information that may be used in computing an availability. Revenue data may include bid prices, yields, and/or other such types of revenue data associated with travel inventory items. As discussed, the inventory system determines one or more geographical inventory controls for each travel inventory item for each selected type of geographical location data. For example, if an inventory request corresponds to a first travel inventory item, and the selected types of geographical location data are a point of sale, a point of commencement, and a point of sale IP address, the inventory system may determine one or more geographical inventory controls for the travel inventory item associated with the point of sale, one or more geographical inventory controls for the travel inventory item associated with the point of commencement, and one or more geographical inventory controls for the travel inventory item associated with the point of sale IP address. In some embodiments, at least one geographical inventory control determined for each type of travel inventory item for each selected type of geographical location data may be a yield for the travel inventory item.

A candidate availability is computed for each geographical location indicated by the one or more types of geographical location data (block 210) based on the one or more geographical inventory controls. For example, if a point of sale is determined to be geographical location A and a point of commencement is determined to be geographical location B for an inventory request for a travel inventory item, the inventory system may determine a candidate availability for the travel inventory item based on geographical location A and a candidate availability for the travel inventory item based on geographical location B. Based on one or more business rules associated with the travel merchant of the inventory system, a particular candidate availability is selected to be used in responding to the inventory request (block 212). Generally, business rules may be stored in a database accessible by the inventory system 106, such that the inventory system 106 may select a candidate availability from among a plurality of candidate availabilities based at least in part on business rules/system parameters. Continuing the example provided above, if the inventory system determined a candidate availability based on the point of sale (geographical location A) and the point of commencement (geographical location B), a business rule may identify which candidate availability to select for the inventory request/response. Using the selected candidate availability for the inventory request, the inventory system generates and communicates an inventory response for the inventory request (block 214).

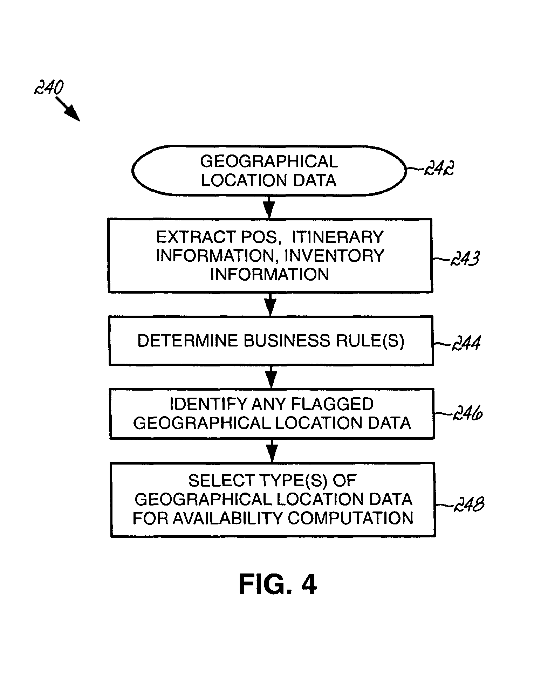

Turning now to FIG. 4, this figure provides a flowchart 240 that illustrates a sequence of operations that may be performed by the inventory system 106 consistent with some embodiments of the invention to select one or more types of geographical location data for an availability computation. As shown, geographical location data (block 242) is analyzed to determine/extract a point of sale, itinerary information (e.g., board points, off (unload) points, timings, cabin codes, booking classes, etc.), and/or inventory information (capacities, load factors, expected load factors, etc.) (block 243). Based on the point of sale, itinerary information, and/or inventory information, the inventory system may determine one or more business rules associated with the inventory request (block 244). For example, based on the originating client device associated with the inventory request, one or more business rules may be relevant for the inventory request, where such business rules may identify particular types of geographical location data to use for calculating availability and/or particular types of geographical location data that may be flagged and/or discarded. Similarly, based on a point of sale, a board point, and/or an off point for the requested travel inventory items, the inventory system may determine one or more business rules relevant to the inventory request that may further identify types of geographical location data to select for availability computation.

Generally, business rules may be defined by a travel merchant of the inventory system via a graphical user interface. Through the interface, a travel merchant may define business rules by specifying criteria type/level of applicability and content, where such business rules may select one or more of point of sale, point of commencement, point of sale IP, point of sale GPS, point of arrival, and/or point of departure based on the criteria type/level of applicability and content of the business rules. Criteria types may include, for example, geographical information like Airports/Cities/States/Regions with inclusion/exclusion logic, point of sale information such as Office IDs/IATA codes/ERSP codes and/or other IATA-standard point of sale attributes with inclusion/exclusion logic, temporal/itinerary information such as dates/timings, flight information such as cabin codes/booking class codes/capacities/load factors, and/or other such types of information. Criteria levels of applicability may include, for example, flight and/or itinerary information such as board point, off point, via point, departure time, arrival time, departure date, arrival date, capacity, availability request IATA standard point of service originator. Relevant and/or applicable business rules may generally be determined by matching information determined for the inventory request with criteria of business rules. Geographical location information of the inventory request may be associated with one or more matching business rules. Furthermore, the inventory system may determine/modify geographical location data based on one or more business rules. For example, if a point of commencement has not been computed, then a point of departure may be set as the point of commencement. As another example, if a point of sale IP has not been computed, then a point of sale IP may be removed from a list of determined types of geographical location data. Similarly, if a point of sale GPS has not been computed, then a point of sale GPS may be removed from a list of determined types of geographical location data.

Based on the business rules, types of geographical location data may be flagged (block 246). For example, if a POSIP determined for an inventory request is identified as being associated with a proxy service that may cause the IP address to be inaccurate for the originating client device according to information stored in an IP geolocation information database accessible by the inventory system, a business rule may indicate that the POSIP should be flagged/discarded and/or that a different type of geographical location data should be selected. Based on the flagged types of geographical location data and/or the determined one or more business rules, one or more types of geographical location data may be selected for the availability computation (block 248). As mentioned, in some embodiments of the invention, one or types of geographical location data may be flagged based at least in part on one or more business rules. Moreover, one or more types of geographical location data may be selected for the availability computation based at least in part on one or more business rules and/or any flagged types of geographical location data. Generally, one or more relevant business rules may define a list of types of geographical location data to use in computing availability. However, in some embodiments, no relevant business rules may be determined for an inventory request, and/or a relevant business rule may not identify any types of geographical location data to use in computing availability. In these embodiments, the inventory system may perform an availability computation that is not based on any types of geographical location data.

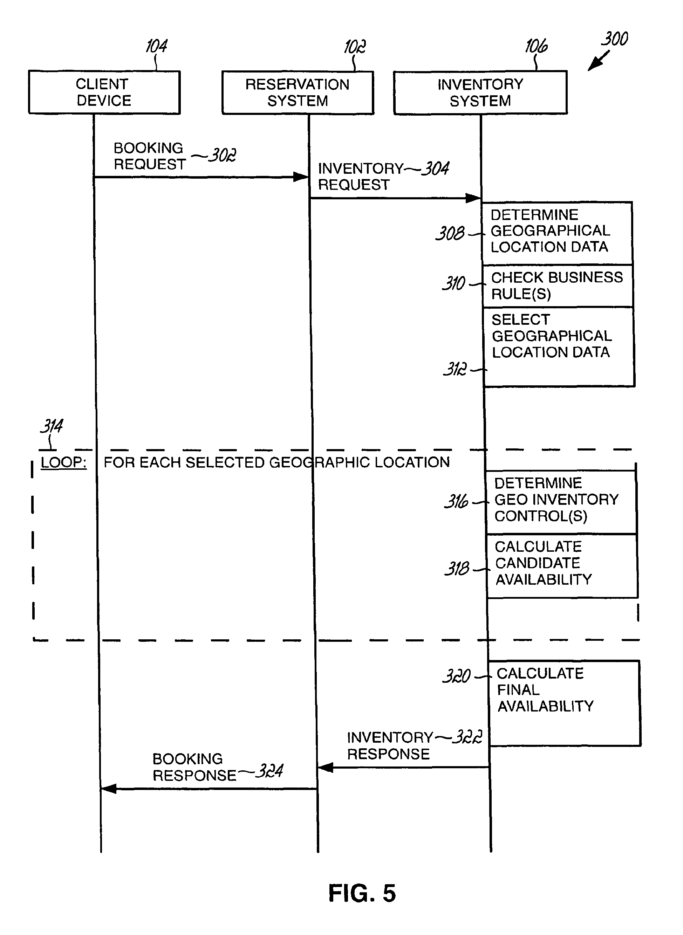

Turning now to FIG. 5, this figure provides an example routine 300 that may be performed by the client device 104, the reservation system 102, and the inventory system 106, consistent with some embodiments of the invention to dynamically determine availability for one or more travel inventory items and generate a booking response based at least in part on geographical location data that may be determined from a booking request. As shown, the client device 104 may communicate a booking request to the reservation system where the booking request includes corresponds to at least one travel inventory item (block 302). The reservation system 102 communicates an inventory request for each requested travel inventory item to an inventory system that manages the travel inventory item (block 304). Geographical location data of one or more types may be determined for the inventory request (block 308). Based on this geographical location data of one or more types, the inventory system may determine one or more business rules associated with the inventory system and/or the travel provider of the inventory system. Based on the one or more business rules, the inventory system selects one or more types of the geographical location data associated with the inventory request. As shown, for each selected type of geographical location data, the inventory system performs a loop 314, where the inventory system 106 determines one or more geographical inventory controls based on the geographical location associated with each type geographical location data for the travel inventory item (block 316), and the inventory system 106 calculates a candidate availability based on the determined geographical inventory controls (block 318).

After calculating a candidate availability for each geographical location identified by the one or more selected types of geographical location data, the inventory system 106 calculates a final availability (block 320) which is selected from one of the candidate availabilities. An inventory response may be communicated to the reservation system 102 that indicates the final availability for the at least one travel inventory item. A booking response from the reservation system 102 may be communicated to the client device 104 where the booking response includes the determined final availability for each travel inventory item of the booking request.

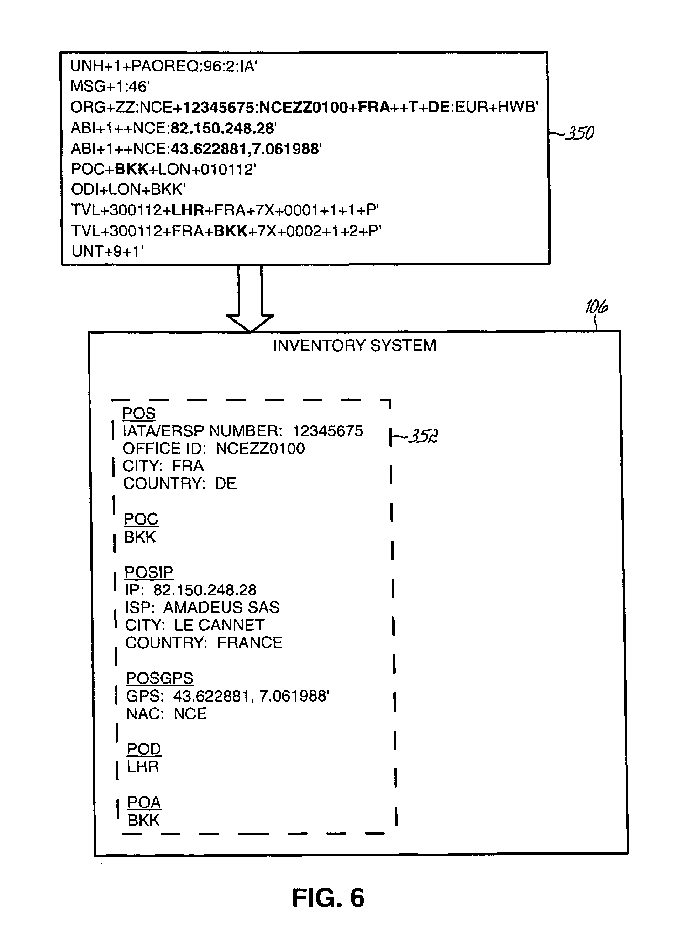

FIG. 6 provides an example inventory request 350 that may be received by an inventory system 106 associated with an example airline (7X) and types of geographical location data 352 that may be determined therefrom. The example inventory request 350 includes travel inventory items corresponding to two flight segments - a flight segment (7X 0001) from London (LHR) to Frankfurt (FRA) and a flight segment (7X 0002) from Frankfurt (FRA) to Bangkok (BKK). As shown, a point of sale (POS) is determined to be a travel agency associated with IATA number 123456, where the travel agency associated with that IATA number is located in Frankfurt, Germany. A point of commencement (POC) is determined to be Bangkok (i.e., BKK) as indicated in a point of commencement (POC) edifact of the inventory request 350. A point of sale IP (POSIP) is determined to have an IP address of 82.150.248.28, which corresponds to an ISP provider 'Amadeus SAS', which is located in Le Cannet, France, where the IP address is indicated in an ABI edifact of the inventory request. A point of sale GPS (POSGPS) is determined to have GPS coordinates of 43.622881, 7.061988', which correspond to a nearest airport having the IATA airport code NCE (i.e., Nice, France). In this example, and assuming that flight segment 7X 0001 is before flight segment 7X 0002, a point of departure (POD) is determined to be London (LHR), as may be determined based on the chronology of the flight segments (i.e., the board point of the earliest travel segment), and a point of arrival (POA) is determined to be Bangkok (BKK), as may also be determined based on the chronology of the flight segments (i.e., the unload point of the latest travel segment).

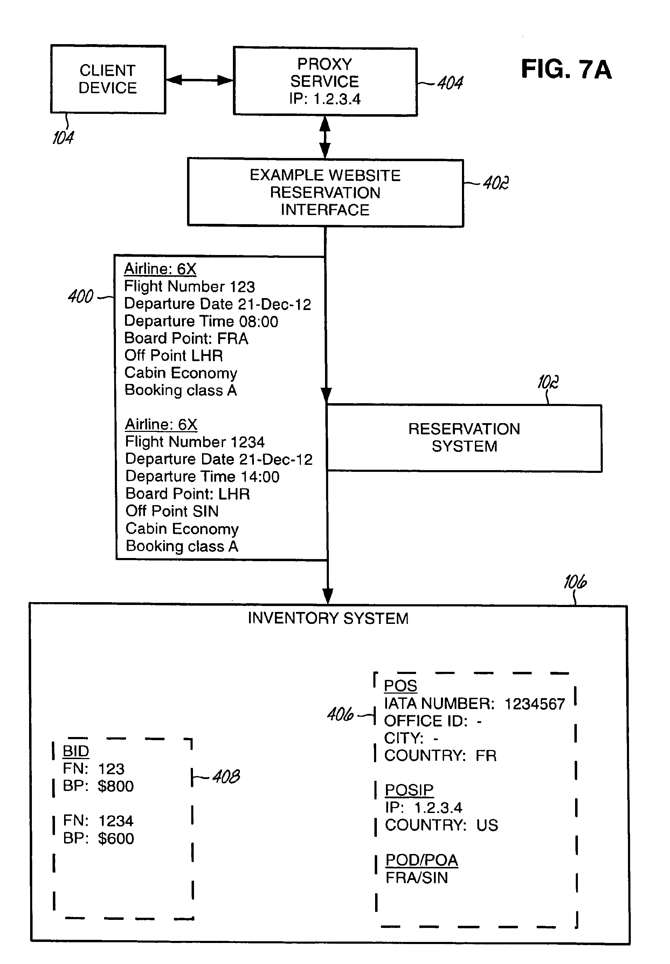

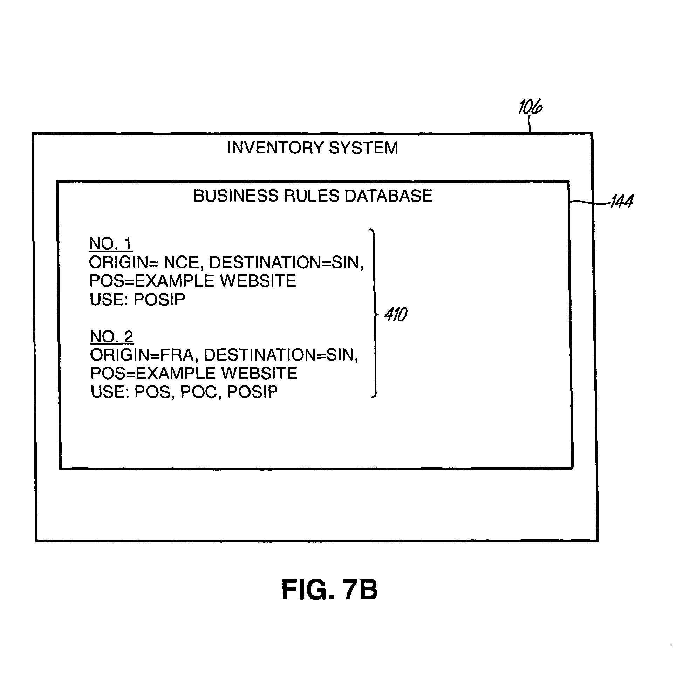

FIGS. 7A-C provide block diagrams that illustrate an example of a booking request 400 that may be received by a reservation system 102 and communicated as an inventory request to an inventory system 106 of an example airline 6X, where the booking request 400 is associated with a web-based travel reservation interface 402 (which in the example is named 'EXAMPLE WEBSITE'). As shown, the originating client device 104 is communicating with the web-based travel reservation interface 402 using a proxy service 404. Therefore, the IP address of 1.2.3.4 is not the IP address of the client device 104, rather the IP address corresponds to the proxy service 404. The inventory system 106 may determine geographical location data 406 including a point of sale (POS) of France, a point of sale IP (POSIP) that identifies the United States, a point of departure (POD) of Frankfurt (FRA), and a point of arrival of Singapore (SIN). In addition, the inventory system 106 determines geographical inventory controls (in this example revenue data 408) including bid prices for the requested flights (flight 123 and flight 1234) of the booking request 400. As shown in FIG. 7B, example business rules 410 (labeled 'NO. 1' and 'NO. 2') may be stored in a business rules database 144 accessible by the inventory system 106, such that the inventory system 106 may select one or more of the types of geographical location data 406 for computing availability for the travel inventory items of the booking request 400. In this example, the inventory system 106 may analyze the determined types of geographical location data 406 based on the criteria of the business rules 410 to determine a relevant business rule for the inventory request. In this example, business rule NO. 2 has criteria (i.e., 'ORIGIN=FRA, DESTINATION=SIN, POS=EXAMPLE WEBSITE') that corresponds to the inventory request. Based on the matching criteria, the inventory system 106 extracts the list of types of geographical information provided in the relevant business rule NO. 2 (i.e., 'USE: POS, POC, POSIP'). In addition, as discussed previously, in some embodiments, a system parameter may select the point of departure as the point of commencement, when the inventory system 106 is unable to determine the point of commencement from the inventory request. Based on the list provided by the relevant business rule NO. 2, the inventory system 106 selects the point of sale, point of commencement, and the point of sale IP for calculating availability for the inventory request based on the booking request 400.

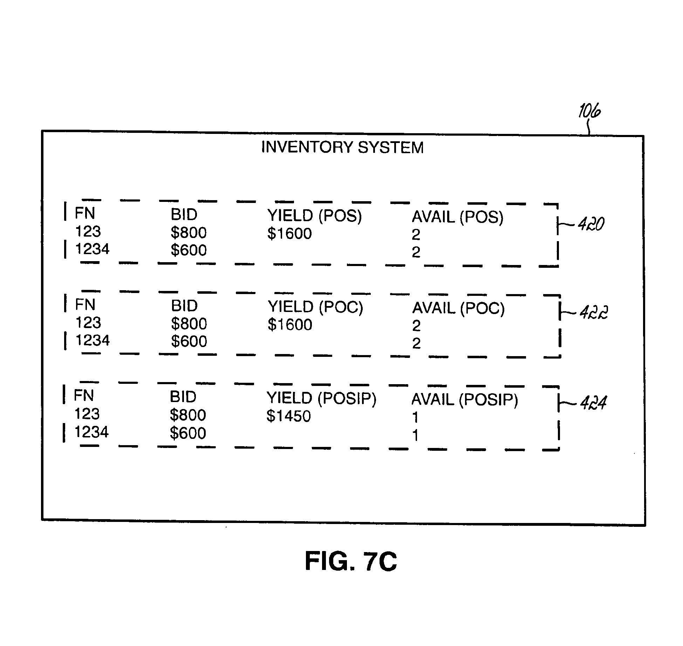

As shown in FIG. 7C, based on the determined relevant business rule NO. 2, the inventory system 106 determines a candidate availability 420-424 for each travel inventory item (i.e., flight no. 123 and flight no. 1234) for each geographical location indicated in the selected types of geographical location data. As shown, the inventory system 106 calculates an initial candidate availability 420 that is based on the point of sale, where this candidate availability indicates that two seats are available for each flight if the availability is calculated based on the point of sale. The inventory system 106 calculates another candidate availability 422 that is based on the point of commencement (which in this example was determined from the point of departure), where this candidate availability indicates that two seats are available for each flight if the availability is calculated based on the point of commencement. The inventory system 106 calculates another candidate availability 424 that is based on the point of sale IP address, where this candidate availability indicates that one seat is available for each flight if the availability is calculated based on the point of sale IP.

The calculation of an availability to use in an inventory response communicated to the reservation system 102 may generally be based at least in part on one or more business rules/system parameters that may be stored in the business rules database 144 and configurable by a user via a graphical user interface executing on the inventory system 106 and/or a computing system in communication with the inventory system 106. Generally, selecting an availability for use in the inventory response may be based at least in part on system parameters/business rules that may include mathematical operators that may be used to define a selection hierarchy for candidate availabilities, geographical location information, geographical location information selected for calculating availability, calculated candidate availabilities, flights/itinerary information, and/or other such related travel/inventory/revenue related information. For example, system parameters and/or business rules may indicate one or more selection hierarchies that are applicable: when the candidate availabilities are different; when a point of sale IP is associated with a proxy service; when geographical locations identified by the different types of geographical location data are inconsistent; and/or other such scenarios that may be identified by the travel merchant and addressed via one or more configurable system parameters/business rules.

Returning to the example provided in FIGS. 7A-C, the system parameters/business rules may indicate that the candidate availability 420-424 having the lowest availability is to be selected as the availability to use in the inventory response. In this example, the candidate availability 424 that is based on the point of sale IP corresponds to the lowest availability, such that the inventory system 106 may communicate an inventory response to the reservation system 102 that indicates that one seat may be booked for each flight. However, as discussed previously, in some embodiments, a system parameter/business rule may indicate that if a point of sale IP is associated with a proxy service, the candidate availability determined based on the point of sale IP may be flagged, such that the candidate availability is not used in determining the availability for the inventory response. Generally, an IP address determined for a point of sale IP may be checked against an IP geolocation database (e.g., the location database 146 of FIG. 2) that stores location and/or service information corresponding to IP addresses to determine whether the point of sale IP corresponds to a proxy service. In the example provided in FIGS. 7A-C, the point of sale IP does correspond to a proxy service 404 (i.e., the proxy service having an IP address of '1.2.3.4'). Therefore, if the inventory system 106 of FIGS. 7A-C is configured by a system parameter/business rule to identify and flag a point of sale IP that is associated with a proxy service, the inventory system may select the candidate availability 420,422 based on the point of sale or the point of commencement (since both are the same in this example), such that the inventory response indicates that two seats are available on each flight for a yield of $1600. Therefore, as illustrated, some embodiments of the invention may detect an inventory request associated with a proxy service (e.g., a client device is communicating with the reservation system 102 and/or the inventory system 106 via a proxy service). In these embodiments, the inventory system 106 may dynamically calculate availability such that a higher yield may be realized in spite of the use of a proxy service.

In general, the routines executed to implement the embodiments of the invention, whether implemented as part of an operating system or a specific application, component, program, object, module or sequence of instructions, or even a subset thereof, will be referred to herein as "computer program code," or simply "program code." Program code typically comprises one or more instructions that are resident at various times in various memory and storage devices in a computer, and that, when read and executed by one or more processors in a computer, cause that computer to perform the steps necessary to execute steps or elements embodying the various aspects of the invention. Moreover, while the invention has and hereinafter will be described in the context of fully functioning computers and computer systems, those skilled in the art will appreciate that the various embodiments of the invention are capable of being distributed as a program product in a variety of forms, and that the invention applies equally regardless of the particular type of computer readable media used to actually carry out the distribution.

The program code embodied in any of the applications/modules described herein is capable of being individually or collectively distributed as a program product in a variety of different forms. A computer program product may comprise a computer readable storage medium and the program code stored on the computer readable storage medium and configured upon execution by at least one processor to perform the method of any of claims 1-13. In particular, the program code may be distributed using a computer readable media, which may include computer readable storage media and communication media. Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Communication media may embody computer readable instructions, data structures or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

These computer program instructions may also be stored in a computer readable medium that can direct a computer, other types of programmable data processing apparatus, or other devices to function in a particular manner, such that the instructions stored in the computer readable medium produce an article of manufacture including instructions that implement the function/act specified in the block or blocks of the flowchart and/or block diagram.

The computer program instructions may also be loaded onto a computer, other programmable data processing apparatus, or another device to cause a series of computations to be performed on the computer, the other processing apparatus, or the other device to produce a computer implemented process such that the executed instructions provide one or more processes for implementing the functions/acts specified in the flowchart and/or block diagram block or blocks.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of', or variants thereof are used in either the detailed description or the claims, such terms are intended to be inclusive in a manner similar to the term "comprising."

While all of the present invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

## Claims

1. A method for dynamically computing availability for travel inventory items managed by an inventory system, the method comprising:
receiving, at the inventory system, an inventory request for a type of travel inventory item managed by the inventory system;
determining, with at least one processor of the inventory system, a plurality of types of geographical location data corresponding to the inventory request;
selecting, with the at least one processor, at least one of the types of geographical location data to use to compute the availability;
determining, with the at least one processor, at least one geographical inventory control associated with the type of travel inventory item for each geographical location indicated by the selected types of geographical location data; and
computing, with the at least one processor, the availability for the inventory request based on the at least one geographical inventory control determined for each indicated geographical location.

2. The method of claim 1, wherein the types of geographical location data include an internet protocol address.

3. The method of any of the preceding claims, wherein the at least one geographical inventory control comprises revenue data.

4. The method of any of the preceding claims, wherein the types of geographical location data include geographical location coordinates.

5. The method of claim 4, wherein the geographical location coordinates comprise global positioning system coordinates.

6. The method of any of the preceding claims, wherein the types of geographical location data include a point of sale.

7. The method of any of the preceding claims, wherein the types of geographical location data include a point of commencement.

8. The method of any of the preceding claims, wherein the types of geographical location data include a point of departure and a point of arrival.

9. The method of any of the preceding claims, further comprising:
determining, with the at least one processor, whether the inventory request is associated with a proxy service based at least in part on the types of geographical location data,
wherein the availability for the inventory request is computed based at least in part on whether the inventory request corresponds to a proxy service.

10. The method of claim 9, wherein the types of geographical location data include a point of sale internet protocol address that identifies a communication network address corresponding to the inventory request, and further comprising:
analyzing the communication network address with a database of communication network addresses to determine whether the inventory request is associated with the proxy service.

11. The method of any of the preceding claims, wherein computing the availability for the inventory request based on the at least one geographical inventory control determined for each indicated geographic location comprises:
computing, with the at least one processor, a candidate availability for each geographic location indicated by the selected types of geographical location data based on the at least one geographical inventory control determined for the indicated geographic location; and
selecting a particular candidate availability as the availability for the inventory request based at least in part on the indicated geographic locations and the selected types of geographical data.

12. The method of claim 11, wherein selecting the particular candidate availability as the availability for the inventory request is based at least in part on at least one business rule.

13. The method of any of the preceding claims, further comprising:
communicating an inventory response based at least in part on the computed availability for the inventory request from the inventory system to a reservation system.

14. A system for dynamically computing availability for travel inventory items, the system comprising:
at least one processor; and
program code configured upon execution by the at least one processor to perform the method of any of claims 1-13.

15. A computer program comprising:
program code configured upon execution to perform the method of any of claims 1-13.
